# EUROPEAN PATENT APPLICATION

(11) **EP 3 992 951 A1**
(43) Date of publication of application: **04.05.2022**
(21) Application number: 21205618.8
(22) Date of filing: 29.10.2021
(51) Int. Cl.: G08G 5/00, G01C 23/00, G01S 13/95

(54) **FLIGHT PATH INSPECTION DISPLAY**

(30) Priority: 29.10.2020 US 202017083778; 26.07.2021 US 202117385152
(71) Applicant: Rockwell Collins, Inc., Cedar Rapids, IA 52498 (US)
(72) Inventor: TEAGUE, Jacob G., West Melbourne, FL, 32904 (US)
(74) Representative: Dehns

(57) **Abstract**

A system for rendering flight path specific weather information receives mid-to-long range weather information and one or more flight paths. The weather information corresponding to each of the flight paths is segregated and divided into portions that may be rendered separately on a secondary display, reorganized to be enlarged to occupy the secondary display. Indicators of the aircraft location and destination are maintained on the secondary display with respect to the divided, reorganized flight paths. Each divided, reorganized flight path segment includes an artifice at a peripheral portion indicating where the flight path segments should be rejoined. Multiple flight paths may be processed and rendered to provide a detailed view of each path for pilot consideration.

## Description

### BACKGROUND

Weather displays limit detail visibility along a flight path in favor of a cohesive long-range view. Those limitations may lead to costly flight plan deviations and / or putting the aircraft in a hazardous situation due to poor flight path planning. These risks are substantially increased in single pilot operations where a copilot is not available to monitor mid-to-long range information in parallel.

### SUMMARY

In one aspect, embodiments of the inventive concepts disclosed herein are directed to a system and method for rendering flight path specific weather information. Mid-to-long range weather information and one or more flight paths are received. The weather information corresponding to each of the flight paths is segregated and divided into portions that may be rendered separately on a secondary display, reorganized to be enlarged to occupy the secondary display.

In a further aspect, indicators of the aircraft location and destination are maintained on the secondary display with respect to the divided, reorganized flight paths. In a further aspect, each divided, reorganized flight path segment includes an artifice at a peripheral portion indicating where the flight path segments should be rejoined.

In a further aspect, multiple flight paths may be processed and rendered to provide a detailed view of each path for pilot consideration.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a representation of a weather radar view;
FIG. 2 shows a representation of multiple flight paths rendered on a secondary display;
FIG. 3 shows a block diagram of a system suitable for implementing exemplary embodiments;
FIG. 4 shows a flowchart of a method for rendering weather radar data according to an exemplary embodiment;

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system for rendering flight path specific weather information that receives mid-to-long range weather information and one or more flight paths. The weather information corresponding to each of the flight paths is segregated and divided into portions that may be rendered separately on a secondary display, reorganized to be enlarged to occupy the secondary display. Indicators of the aircraft location and destination are maintained on the secondary display with respect to the divided, reorganized flight paths. Each divided, reorganized flight path segment includes an artifice at a peripheral portion indicating where the flight path segments should be rejoined. Multiple flight paths may be processed and rendered to provide a detailed view of each path for pilot consideration.

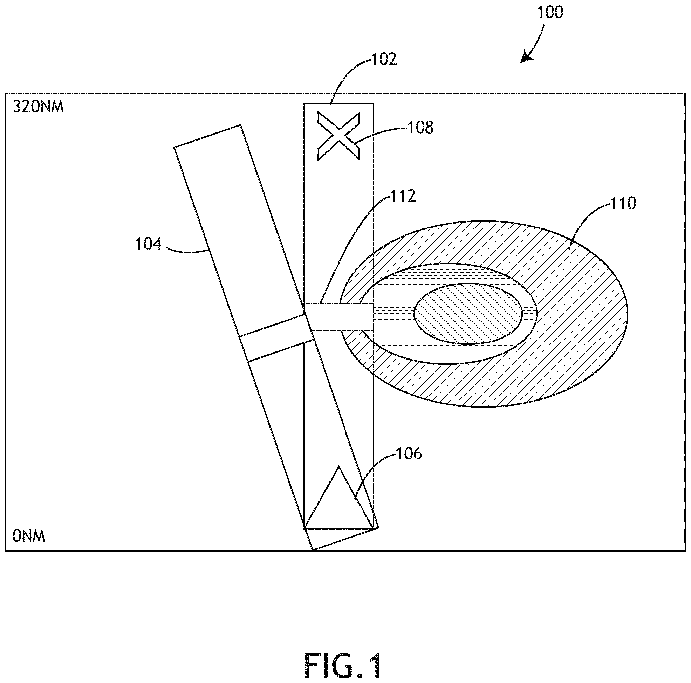

Referring to FIG. 1, representations of a weather radar view 100 is shown. A primary display renders the view 100, including weather cells 110 and one or more flight paths 102, 104. Each flight path 102, 104 may include a current aircraft location 106 and a current destination 108. In at least one embodiment, the flight paths 102, 104 may define multiple alternative flight paths 102, 104 for a pilot's selection.

Because the weather radar view 100 is directed to a mid-to-long range view, providing a broad view of the surrounding area, details in close proximity to various potential flight paths 102, 104 are difficult or impossible to discern, and may not be rendered or indicated at all.

In at least one embodiment, each flight path 102, 104 defines a corresponding portion of the weather radar view 100, including all of the detailed radar information corresponding to such flight path 102, 104. The flight paths 102, 104 are divided into segments for re-rendering, along with the corresponding radar information; the segments are defined to be re-organized to more fully occupy a secondary display.

In at least one embodiment, each flight path 102, 104 includes an artifice 112 to indicate how the flight path segments relate to each other when in the re-organized form.

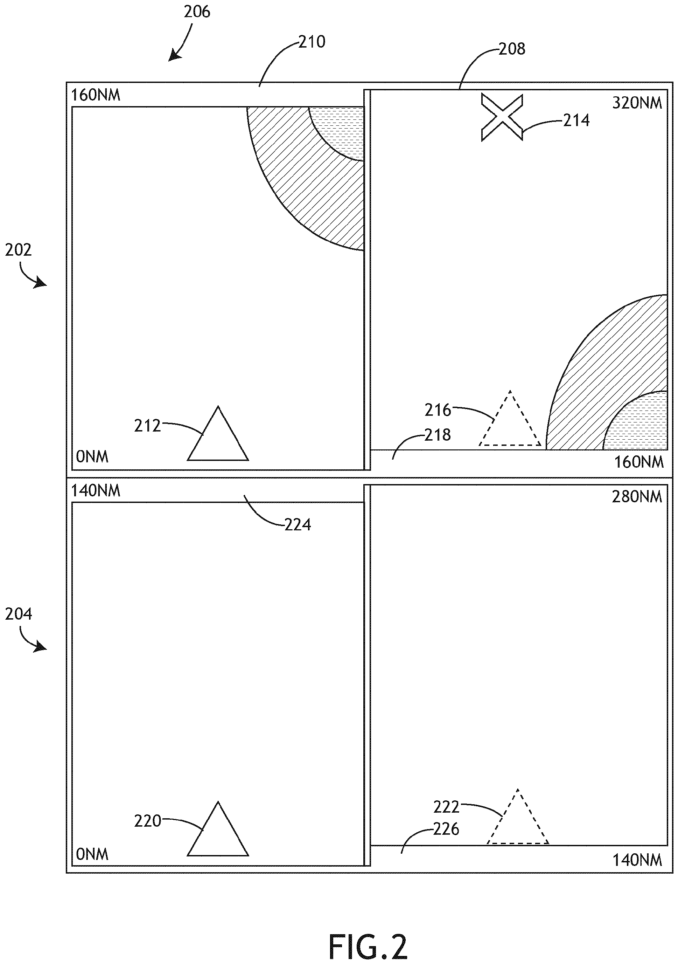

Referring to FIG. 2, a representation of multiple bifurcated flight paths 202, 204 rendered on a secondary display is shown. A system correlates flight paths 202, 204 with associated radar data and divides the flight paths 202, 204 into segments 206, 208 that may be rearranged and rendered on the secondary display with the associated radar data in consistent relative position with respect to each segment. The segments 206, 208 are arranged and oriented to maximize the representation of radar data while continuing to render the entire flight path 202, 204. In at least one embodiment, multiple segmented flight paths 202, 204 are rendered simultaneously for comparison. While embodiments illustrated herein show flight paths 202, 204 divided into two segments 206, 208, other numbers of segments are envisioned.

In at least one embodiment, each segment 206, 208 includes an artifice 210, 218, 224, 226 indicating how the segments 206, 208 where originally aligned. For example, a first flight path 202 may be bifurcated into a first segment 206 and a second segment 208. The first segment 206 includes an upper artifice 210 (such as an upper border with increased thickness) while the second segment 208 includes a lower artifice 218 (such as a lower border with increased thickness); the upper artifice 210 and lower artifice 218 are disposed to indicate to the user that they would overlap to reconstitute the original, linear flight path 202, 204.

In at least one embodiment, each segment 206, 208 includes an aircraft position indicator 212, 216, 220, 222. In at least one embodiment, where the segment 206, 208 does not overlap with the current position of the aircraft, the segment 206, 208 may include a virtual indicator 216, 222 to indicate where in a corresponding alternate segment 206, 208 a current indicator 212, 220 is located. Furthermore, in at least one embodiment, segments 206, 208 may include a destination indicator 214 and potentially a virtual destination indicator.

It may be appreciated that while embodiments shown herein illustrate linear flight paths 202, 204, curved or otherwise non-linear flight paths 202, 204 are envisioned. In at least one embodiment, the system may apply a linear segmentation to divide the flight path 202, 204 into simple rectangular segments. Alternatively, the flight path 202, 204 and radar data may be transformed into linear segments to accurately represent the radar data with respect to a linearly converted flight path 202, 204.

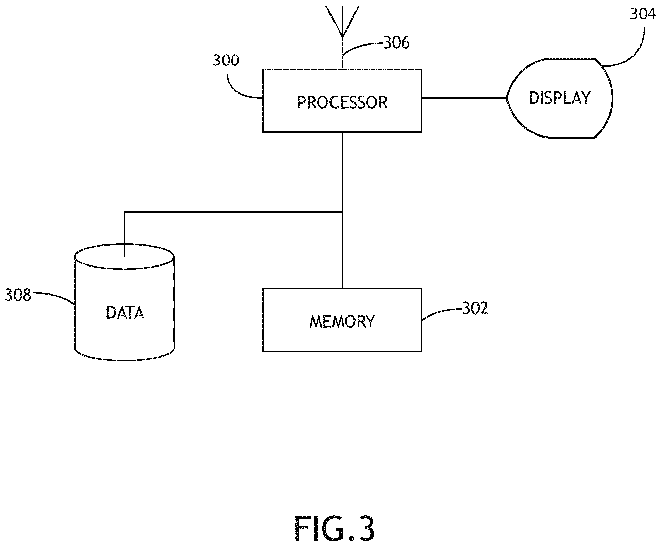

Referring to FIG. 3, a block diagram of a system suitable for implementing exemplary embodiments is shown. The system includes a processor 300, memory 302 connected to the processor 300 for storing processor executable code, and a display 304 for rendering weather information. In at least one embodiment, one or more avionics systems, such as a weather radar 306, may be connected to the processor 300 to provide weather data. In at least one embodiment, a data storage element 308 may be connected to the processor 300 for persistent storage of weather data.

The processor 300 is configured to receive weather related data and flight path related data. The weather related data is correlated to the flight path data such that detailed weather data is defined for the entire flight path. Flight paths are then segmented to be reorganized onto a secondary display 304 where only the flight path segments are rendered, and in a form and orientation that allows the segments to be enlarged to occupy the maximum amount of space on the secondary display.

In at least one embodiment, alternative flight paths are also defined, correlated, segmented, and rendered. Rendering alternative flight paths allows the user to select a flight path based on detailed related knowledge.

In at least one embodiment, each flight path segment includes an artifice to correlate each segment with any partner segments and indicate how the segments fit together into a complete flight path. For example, boundary portions of each segment where the segments would be joined may include a thicker line segment, line segments having a distinct pattern, arrows indicating an expected direction of travel, etc. Furthermore, multiple flight paths may be rendered in distinct colors, with corresponding segments rendered in corresponding colors.

In at least one embodiment, segments may include indicators of aircraft location and destination, including potentially virtual indicators disposed at a boundary portion of a segments indicating the aircraft location in a neighboring segment to allow the pilot to make a quick, accurate determination of the aircrafts position with respect to the radar information displayed in each segment.

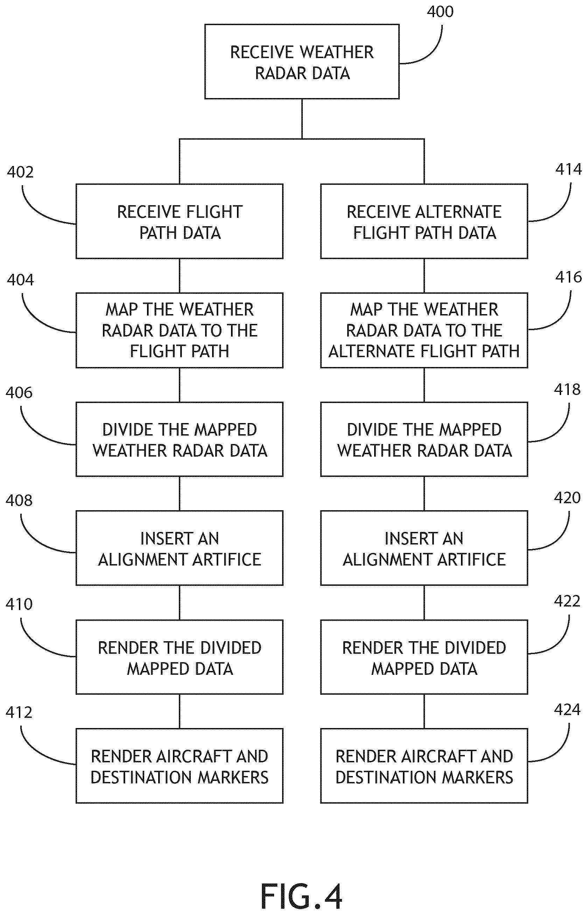

Referring to FIG. 4, a flowchart of a method for rendering weather radar data according to an exemplary embodiment is shown. Weather radar data is received 400 and a flight path is received 402 from avionics systems or a communication system. The radar data is mapped 404 to the flight path and the flightpath is divided 406 into segments according to the dimensions of a secondary display such that the segments can be reorganized to show more detail in flight path specific radar detail. In at least one embodiment, an alignment artifice is inserted 408 into each segment to indicate how the segments align.

The flight path segments and corresponding mapped radar data are rendered 410 on a secondary display. In at least one embodiment, aircraft and destination markers are rendered 412 at appropriate locations within the segments. Such aircraft and destination markers may include virtual markers to indicate where the aircraft or destination would be in a segment.

In at least one embodiment, the flight path and corresponding radar data may be re-segmented and re-rendered periodically or continuously as the aircraft travels along the flight path to shorten the length of flight path to be rendered and maximize the amount of radar data that can be rendered.

In at least one embodiment, a system may receive 414 an alternate flight path, map 416 the radar data to the alternate flight path, divide 418 the alternate flight path into segments, and render 422 the alternate flight path segments and corresponding radar data on the secondary display. In at least one embodiment, the alternate flight path segments may include 420 alignment features and aircraft and destination markers, including virtual markers.

Embodiments of the present disclosure improve situational awareness by displaying both flight path specific radar data and long-range data. Furthermore, embodiments provide a method to show all relevant information without hardware updates to existing displays.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the broad scope of the invention as defined by the claims.

## Claims

1. A method comprising:
receiving (400) radar data;
receiving (402) a primary flight path (102);
mapping (404) the radar data to the primary flight path;
dividing (406) the primary flight path and corresponding radar data into at least two segments (206, 208); and
rendering (410) the at least two segments onto a secondary display,
wherein the at least two segments are disposed non-linearly and enlarged.

2. The method of Claim 1, further comprising:
applying an alignment artifice to each of the at least two segments indicating how corresponding segments are related.

3. The method of Claim 1 or 2, further comprising:
rendering an aircraft location and aircraft destination in each of the at least two segments.

4. The method of Claim 3, wherein at least one aircraft location comprises a virtual aircraft location.

5. The method of Claim 3, wherein at least one aircraft destination comprises a virtual aircraft destination.

6. The method of any preceding Claim, further comprising:
receiving (414) an alternate flight path (104);
mapping (416) the radar data to the alternate flight path;
dividing (418) the alternate flight path and corresponding radar data into at least two segments; and
rendering (422) the at least two alternate segments onto the secondary display,
wherein the at least two alternate segments are disposed non-linearly and enlarged.

7. The method of any preceding Claim, further comprising periodically re-dividing the primary flight path and corresponding radar data into at least two segments, and re-rendering the at least two segments.

8. A system comprising:
a display (304); and
at least one processor (300) in data communication with the display and a memory (302) storing processor executable code for configuring the at least one processor to perform the method of claim 2 or any claim dependent thereon.

9. The system of Claim 8, wherein the at least one processor is further configured to transform the primary flight path and corresponding radar data into linear segments when the primary flight path includes curves.

10. A computer apparatus comprising:
at least one processor in data communication with a display and a memory storing processor executable code for configuring the at least one processor to perform the method of claim 2 or any claim dependent thereon.

11. The computer apparatus of Claim 10, wherein the at least one processor is further configured to transform the primary flight path and corresponding radar data into linear segments when the primary flight path includes curves.
